# EUROPEAN PATENT APPLICATION

(11) **EP 1 249 773 A2**
(43) Date of publication of application: **16.10.2002**
(21) Application number: 01203253.8
(22) Date of filing: 29.08.2001
(51) Int. Cl.: G06F 17/60

(54) **Computerized system for implementing on-line commercial trade**

(30) Priority: 06.09.2000 IT RE000084
(71) Applicant: Credemtel S.P.A., 42100 Reggio Emilia (IT)
(72) Inventor: Preti, Maurizio c/o Credemtel S.p.A., 42100 Reggio Emilia (IT); Croci, Mario, c/o Credemtel S.p.A., 42100 Reggio Emilia (IT)
(74) Representative: Corradini, Corrado

(57) **Abstract**

A computerized system for implementing on-line commercial trade, comprising at least a first open telematic network, accessible via at least one "provider" by a plurality of operators, including purchasers of goods or services and known as the "customer", in which at least one seller of goods or services, known as the "server", is present, and means accessible both to the "customer" and to the "server" for making the payments, characterised by comprising a second telematic network which is protected and accessible only by the "server" and by a third entity responsible for the financial proceedings of the transactions, and known as the "bank".

## Description

This patent relates to the sale and purchase of material and non-material goods and services by information technology means.

The recent wide spread of telematic systems open to all users, such as the INTERNET, has greatly facilitated the development of so-called on-line commerce.

Usually, with this method of commerce, the seller of material or non-material goods or services is connected to a network, for example the INTERNET, in which within the framework of a website he sells products and/or services illustrated in a catalogue with a relative price list.

In the most modern forms of organization, sellers possessing a site are grouped into a portal, which is nothing other than a group of sites in mutual accord.

Hereinafter the seller or sellers of goods or services will be identified as the portal "server", and simply known as the "server".

The person intending to acquire goods or services on line has free access to the site, and can proceed to choose the goods or services of interest and order their despatch, or in the case of non-material goods download them into his own computer after payment.

These persons will be known hereinafter simply as the "customer".

Transactions between "server" and "customer" present a considerable series of problems and difficulties.

The first problem is the lack of secrecy, in that communications between the "customer" and the "server" take place via an intermediary, hereinafter known as the "provider", this latter being inserted into an intercommunication network open to all, for example the INTERNET.

It is general knowledge that by simple and well known expedients it is possible via the network to intercept and access the contents of those communications which take place between the "customer" and "server" by way of the "provider".

A further problem, which constitutes a considerable limit on commercial transactions of information technology type is the method of payment.

For technical reasons, the only method of payment usable up to now has been a credit card or the like.

However the use of a credit card presents large risks as, because of the lack of secrecy of data transferred over the network, the card can easily be cloned by a third party and used thereby at the expense and ignorance of the owner.

The only possible alternative is to effect payment by usual bank channels outside the network, however this is an operation which complicates the mode of purchase and sale, requiring time and being rarely used.

Moreover if the transaction is effected after prior transfer of data between the "customer" and the "server", there is the risk that the data transferred in concluding an authorized transaction becomes used, possibly by third parties, for subsequent unauthorized transactions.

There is also the fact that the payment, or an undertaking to pay, must always occur before despatch of the goods.

There is therefore a requirement for an information technology system which eliminates the aforesaid drawbacks by firstly providing a guarantee of absolute secrecy, and secondly by providing assurance in equal measure to both the "server" and the "customer".

The object of the present invention is to provide such a system. The invention attains said object by the interaction of at least two separate data transmission networks, at least a first of which is a network open to all, to which the parties to the transaction have free access, whereas at least a second is a network known hereinafter as protected, closed or private, which can be directly accessed only by the "server" and by a third separate entity which can be preferably but not exclusively a banking institution, to be known hereinafter simply as the "bank".

Said protected network is implemented by private telephonic connections with dedicated programs which cannot be accessed by those not authorized.

The operability of the system obviously requires that at least the "server" postulates an agreement with the third entity, which establishes with the "server" a relationship of trust and absolute secrecy via the said protected network.

The invention also preferably provides further means for limiting the operability of the three entities involved in the transaction, by the use of a code assigned to each individual transaction, of which all the parties concerned have knowledge.

Lastly, the invention provides the possibility of integrating the system with a third network for facilitating the fulfilment of the financial part of each transaction, and which can be in the form of an existing interbanking network, such as the CBI (Corporate Banking Interbancario) or the credit card circuit, to which both the "server" and the "customer" have separate access via the "bank".

The operability of the system is subject to the criteria apparent from the following examples, which are non-limitative of the invention and are illustrated by the diagrams of the accompanying drawings.

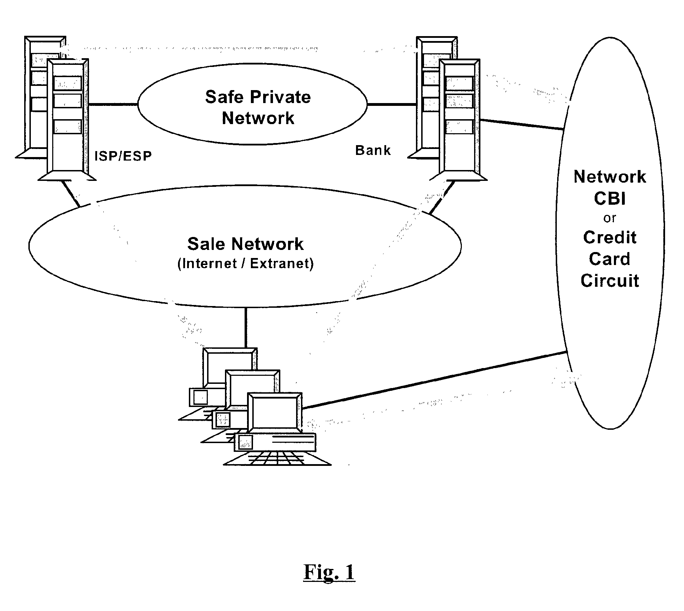

Figure 1 is a schematic diagram of the invention.

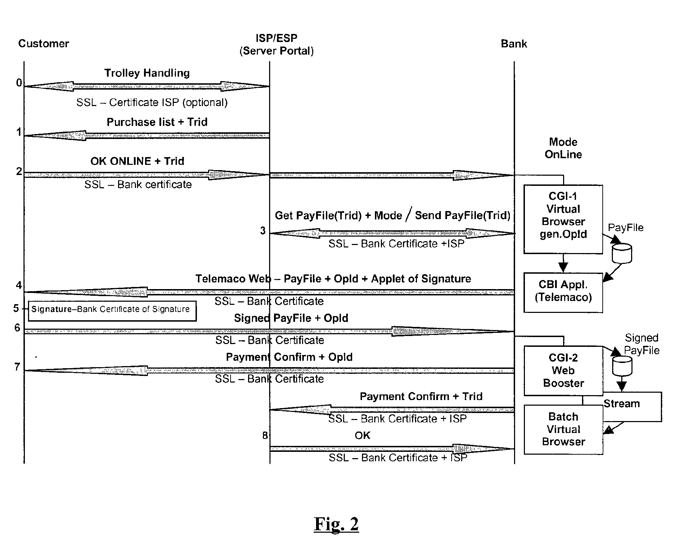

Figure 2 shows the operational criteria of Example 1.

### EXAMPLE 1

Said figures show a first operative stage, indicated by 0, during the course of which the "customer" navigates within the portal or site of the "server" by consulting catalogues, selecting the goods which he intends to purchase and indicating this to the "server".

During this stage, which we shall call "trolley handling", information transfer takes place within the first network, or open network, directly between the "server" and "customer".

During the next operative stage, or stage 1, the "server" confirms to the "customer" the goods which he intends to purchase and the relative prices, presenting him with a sort of order copy or purchase list which the "customer" can annul or approve by clicking with the mouse on an appropriate button visible on the screen.

At the same time, during stage 1, the "server" generates a transaction identification code, called hereinafter "trid".

This "trid" code remains valid for a single transaction, hence even if accessed during the communications no damage would result. The purchase list fed to the "customer" by the seller cannot, as stated, be varied, but must be accepted or rejected in total.

If accepted, the "customer" has merely to click on an "OK" button on the screen with the mouse.

During the next stage, indicated by the number 2, the "server" transmits to the "bank" the purchase list with the relative "trid" code which, as stated, remains valid only for the transaction underway.

This operation can be carried out automatically by the "customer" by clicking on the "OK" button. In this case the "server" will have transmitted the "trid" to the "customer" together with the order copy, however the transmission of this "trid" to the "customer" is effected within a hidden field not accessible to the "customer".

The "server" limits himself to retransmitting the communication of the "customer" together with the order approval directly to the "bank", along the protected network.

The next stage, indicated by 3, consists of a transfer of data, along the protected network, between the "bank" and the "server" and vice versa, who both acknowledge this and accept the purchase list with the relative terms of payment.

During this stage the "server" transmits to the "bank" a confirmation of the order accepted by the "customer" with the price and terms of payment, this confirmation being called the "pay file" and circulating exclusively along the protected transmit between the "server" and "bank".

The "pay file" is created by the "server" immediately on termination of trolley handling.

This stage is followed by stage 4, in which the "bank" asks the "customer" confirmation to make the payment by applying an electronic signature (step 5) and returning to the "bank" (stage 6) the document transmitted during stage 4, duly signed.

During stage 4, the "bank" uses an operation identification code "opld", different from the "trid", which is not made available to the "customer".

The "bank" then confirms that payment has been made, both to the "customer" (stage 7) and to the "server" (stage 8), who then despatches the goods.

As seen, in Example 1 all the operations concerning the purchase take place along an open network between the "server" and the "customer", along the protected network between the "server" and the "bank", and "on-line" between the "bank" and the "customer".

According to the invention, part of the communications between the "bank" and the "customer" can take place off-line, as in the following example.

### EXAMPLE 2

Of the operations performed in this example, stages from 1 to 4 are the same as those described in Example 1.

In stage 5, stage 6 and stage 7, regarding negotiations between the "customer" and the "bank" to effect the payment, said negotiations take place outside telematic networks, for example by making a bank transfer, or by authorizing the issue of a bank receipt.

On positive completion of these stages, stage 8 proceeds as in Example 1.

## Claims

1. A computerized system for implementing on-line commercial trade, comprising at least a first open telematic network, accessible via at least one "provider" by a plurality of operators, including purchasers of goods or services and known as the "customer", in which at least one seller of goods or services, known as the "server", is present, and means accessible both to the "customer" and to the "server" for making the payments, **characterised by** comprising a second telematic network which is protected and accessible only by the "server" and by a third entity responsible for the financial proceedings of the transactions, and known as the "bank".

2. A system as claimed in claim 1, **characterised by** comprising a third telematic network, accessible via the "bank" to support the specific payment and encashment communications.

3. A system as claimed in claim 2, **characterised in that** said third network is an existing interbanking network, for example the CBI (Corporate Banking Interbancario) or the credit card circuit, to which both the "server" and the "customer" have separate access but always via the "bank".

4. A system as claimed in the preceding claims, **characterised by** comprising a "trid" code identifying each individual transmission, which is attributed to the transaction by the "server" and communicated by this latter to the "bank", and is never again reused in the future when the transaction has been concluded.

5. A system as claimed in the preceding claims, **characterised by** comprising an "opld" code identifying each individual transmission, which is attributed to the transaction by the "bank" and communicated by this latter to the "customer".

6. A system as claimed in claim 4, **characterised in that** said open first network supports communications between the "customer" and the "server".

7. A system as claimed in claim 4, **characterised in that** said protected second network supports communications between the "server" and the "bank".
